# EUROPEAN PATENT SPECIFICATION

(11) **EP 4 350 653 B1**
(45) Date of publication and mention of the grant of the patent: **20.05.2026**
(21) Application number: 23201459.7
(22) Date of filing: 03.10.2023
(51) Int. Cl.: G08B 3/10, H02G 3/08

(54) **SOUND DEVICE FOR ELECTRICAL INSTALLATIONS**
SCHALLGERÄT FÜR ELEKTROINSTALLATION
DISPOSITIF SONORE POUR INSTALLATION ÉLECTRIQUE

(30) Priority: 03.10.2022 IT 202200020319
(43) Date of publication of application: 10.04.2024
(73) Proprietor: Vimar S.p.A., 36063 Marostica (VI) (IT)
(72) Inventor: BALDISSERA, Stefano, 36043 Camisano Vicentino (VI) (IT); MOCELLIN, Dario, 36061 Bassano del Grappa (VI) (IT); ZAMPIERIN, Ilario, 36061 Bassano del Grappa (VI) (IT)
(74) Representative: Locas, Davide

(56) References cited:
- CN-U- 2 046 666
- GB-A- 1 283 906
- KR-A- 20070 062 156
- US-A- 3 466 649
- US-A- 4 149 154

## Description

The present invention refers to a sound device of the type intended for use in electrical installations, for example of the domestic or industrial type.

In the technical field relevant to the civil and industrial electrical installations, within the installation use is commonly made of sound devices in order to emit acoustic signals that can be perceived by the people present within the environment in which the installation is installed in order to warn them of the onset of specific situations. Examples of acoustic warnings that are typically used in the domestic environments are represented by the doorbell and by the alarm present in the bathrooms to ask for help, especially from disabled people

Other example of acoustic devices is disclosed in US 4149154 A1 relating to an alarm bell adapted to be used in combination with a system which simultaneously detects smoke, fire, current failure, and unauthorized entry into an enclosure.

As is easy to understand, in order to be able to correctly distinguish the message associated with each sound device, it is necessary to use different sounds for each type of use.

By way of example, in fact, a ringtone is typically used for the doorbell, while a buzzer is used for the alarm present in the bathroom.

However, this need entails some disadvantages both for the manufacturers, who are forced to provide a rather large catalogue of products in order to meet the different needs, and for the installers, who need to keep more products in stock, as the installations are highly diversified.

Aim of the present invention is to make available a sound device for electrical installations that is structurally and functionally conceived to overcome at least in part one or more of the limits of the aforementioned prior art.

Within the scope of this problem, an aim of the present invention is to limit the number of sound devices that need to be provided in order to meet the different installation needs.

A further aim is to make available a sound device that is capable of producing more than one sound, without this feature being able to have a significant impact on the costs, product sizes and ease of installation.

This problem is solved and one or more of these aims are achieved, at least in part, by the invention by means of a sound device for electrical installations according to claim 1.

It will be appreciated that thanks to the contact between the oscillating member and the contact element, the type of sound produced by the electromagnetic acoustic device can be varied. In this way the sound device of the present invention is able to modify the sound it produces by positioning a component on the receiving member, i.e. the sound variation device.

In fact, the sound produced by the device of the present invention is different in the event that the sound variation device is placed in a certain operating position, rather than being removed from the sound variation device or placed in another different position in which there is no contact between the contact element and the oscillating member.

In this way, the sound can be modified in a simple way, directly by the installer. From the industrial point of view, the device of the present invention is also particularly advantageous, since it is possible to produce a single component, provided with a removable part, for reproducing multiple sounds.

The present invention may have one or more of the following preferred features in addition to those set forth above.

In some embodiments said sound variation device comprises a covering surface which is intended to cover said receiving member during the use of the sound device.

In this way, the sound variation device is included in a component of the sound device, reducing the risk that it may be accidentally lost and simplifying the assembly operations of the device.

Preferably said covering surface comprises a plurality of through-openings for emitting the sound which is produced by said electromechanical acoustic device. Preferably said contact element extends away from said covering surface, preferably in a direction substantially perpendicular to the plane of said covering surface. Thanks to one or more of these characteristics, it can be provided that the covering surface is the visible surface of the device, that is, the one from which the sound signal is emitted. Consequently, the contact element can be placed in a position close to the external surface of the receiving member, in proximity to which the oscillating member intended for producing the sound is typically present. Preferably, said reversible fixing means are configured so as to allow the connection of said sound variation device in said first operating position and in said second operating position, said reversible fixing means being preferably configured in such a manner that, when said sound variation device is connected in said second operating position, it is orientated in a state rotated through 180° about an axis which is perpendicular to the covering surface with respect to when it is connected in said first operating position.

Thanks to the possibility offered by the fixing means of placing the sound variation device in the two different operating positions, it is possible to avoid the need to eliminate the contact element if there is no need to use it. In addition, in this way it is possible to reuse it for restoring the other sound mode, if necessary.

In addition, the possibility of changing from one sound emission to another by rotating the covering surface through 180° makes it possible to have a compact structure and at the same time allow a simple modification of the device. Preferably said oscillating element comprises a seat which is substantially aligned with an additional opening formed in said receiving member, said reversible fixing means being configured in such a manner that, when said sound variation device is connected in said second operating position, said contact element is received in said seat without coming into contact with said oscillating element.

This feature is also particularly useful in making the structure compact as it allows to keep the contact element in a zone adjacent to the oscillating element even when it is moved to the second operating position.

Preferably, said oscillating element is of bell-like form and comprises an upper surface, in the region of which it is connected in an oscillating manner to said receiving member and a lateral surface on which said striking member 10 acts, said contact element being preferably configured so as to come into contact with said upper surface when said sound variation device is connected in said first operating position.

Preferably, said electromechanical acoustic device comprises an electromagnet which is configured to control said striking member so as to repeatedly strike said oscillating element, said sound device preferably comprising a terminal block in order to produce an electrical connection which can excite said electromagnet.

Preferably, said contact element is configured so as to modify the frequency and/or the amplitude of oscillation of said oscillating member when said sound variation device is connected in said first operating position.

These characteristics are particularly advantageous in the event that the sound device is in the form of an electrical module, requiring compact dimensions and a shape suitable for use within an electrical installation.

Preferably said connection means comprise flexible tabs.

In this way, the connection to a support for electrical modules of an electrical installation can be done in a simple way and without the use of tools.

Preferably said sound device is in the form of an electrical module for electrical installations.

In preferred embodiments, said sound device includes at least five substantially flat surfaces which form respective faces of a parallelepiped, said terminal block being preferably placed in the region of the further face of said parallelepiped. Preferably one of said five surfaces is the covering surface, and the remaining surfaces are defined by said receiving member.

Preferably, said connection means are placed in the region of two substantially flat surfaces perpendicular to said covering surface and corresponding to opposite faces of said parallelepiped.

Preferably said terminal block is placed in the region of a face of said parallelepiped opposite to that corresponding to said covering surface.

Further preferred aspects are also defined in the appended claims as well as by the following description.

In the present description as well as in the claims appended hereto, and more generally in the context of the present invention, some terms and expressions are deemed to assume, unless otherwise explicitly indicated, the meaning expressed in the following definitions.

In particular, the term "electrical module" means any module, also called outlet, which can be used in a domestic, commercial or industrial electrical installation. Such modules may comprise, by way of non-limiting example, sockets, switches of various kind, sensors, ringtones, buzzers but also fake keys with a covering function. In a preferred embodiment of the invention, the sound device can form both a player-type module and a buzzer-type module by removing the contact element from its position in contact with the oscillating member.

The characteristics and further advantages of the invention will become clearer from the following detailed description of a preferred but not exclusive embodiment thereof illustrated, by way of non-limiting example, with reference to the accompanying drawings in which:
- figures 1 and 1A are respectively a perspective view, partially in section, and a relevant detail, of the sound device of the present invention with the relevant sound variation device in a first operating position, in which the contact element is in contact with the oscillating member; and
- figures 2 and 2A are respectively a perspective view, partially in section, and a relevant detail, of the sound device of the present invention with the relevant sound variation device in a second operating position, in which the contact element is spaced apart from the oscillating member.

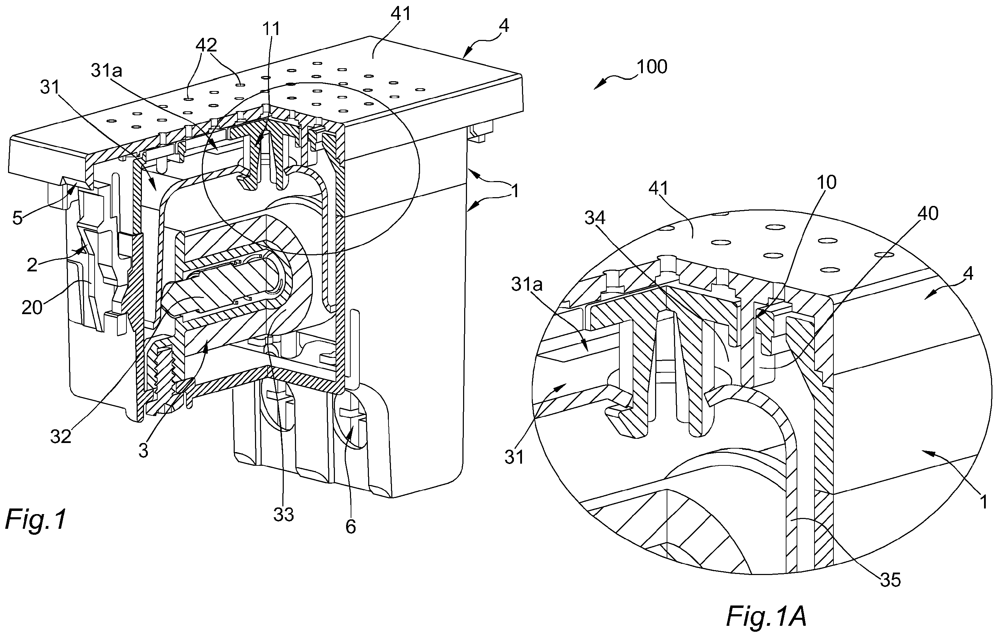

With reference initially to figure 1, with reference numeral 100 it is indicated as a whole a sound device for electrical installations.

As can be observed from the figure, the sound device 100 is preferably in the form of an electrical module, i.e. of a module that can be installed in a civil or industrial electrical installation.

For this purpose, the sound device can be substantially parallelepiped-shaped, possibly with a terminal block 6 arranged in the region of one of the faces of the parallelepiped.

Connection means 2 are also provided which are configured for connecting the sound device 100 to a support frame, not illustrated in the figure, which is precisely intended for installing electrical modules in an electrical installation.

The support frame can be arranged to be fixed to a wall or to other structure in the region of a box-like element, which is intended to be recessed in the wall or in the gaps of light walls and on which the frame is fixed. Inside the box-like element, the electrical cables of the installation can be converged together so as to be connected to the terminal block 6.

It will in any case be appreciated that the electrical device of the present invention can also be intended for an installation without a recessed box, for example on a panel, on an external box or on another type of support, or even be mounted separately, although the present invention finds preferred application in the field of the installations of electrical installations.

Still with reference to figure 1, the sound device 100 comprises a receiving member 1 and an electromechanical acoustic device 3 which is received internally with respect to the receiving member 1.

The receiving member 1 may be delimited by substantially flat surfaces defining respective faces of the parallelepiped. Eventually, it can be associated to a covering surface 41, preferably forming a further face of the parallelepiped, the characteristics of which will be better illustrated below.

In preferred embodiments, the terminal block 6 is placed in the region of a face of the parallelepiped opposite to that formed by the covering surface.

Note that these shapes are compatible with those typical of an electrical module that is used in the electrical installations.

The connection means 2 may comprise flexible tabs 20 which are preferably placed in the region of two substantially flat surfaces perpendicular to the covering surface and corresponding to opposite faces of the parallelepiped.

These tabs 20 are for example configured so as to snap-fit on respective seats of the support frame allowing the sound device to be fixed thereon.

As previously mentioned, inside the receiving member 1 there is the electromechanical acoustic device 3, that is, a device of electromechanical type capable of emitting a sound signal.

The electromechanical acoustic device 3 comprises an oscillating member 31 which is configured so as to emit a sound signal following striking by means of a respective striking member 32**.**

In preferred embodiments, the oscillating element 31 is of bell-like form.

The bell is preferably connected in an oscillating manner to the receiving member 1 in the region of an upper surface 34 of the bell itself.

The striking member 32 instead acts in the region of a lateral surface 35 of the bell.

Preferably, said electromechanical acoustic device 3 comprises an electromagnet 33 which is configured to control the striking member 32 so as to repeatedly strike the bell, or more generally the oscillating element 31.

The terminal block 6 therefore has the purpose of producing the electrical connection that is necessary to excite the electromagnet 33 or, more generally, to allow the actuation of the electromechanical acoustic device 3.

The sound device 100 of the present invention further comprises a sound variation device 4 that allows to vary the sound that is produced by the bell or, more generally, by the electromechanical acoustic device 3.

The sound variation device 4 is connected externally to the receiving member 1 by means of reversible fixing means 5.

Advantageously, the sound variation device 4 is configured so as to modify the frequency and/or the amplitude of oscillation of the oscillating member 31.

This is advantageously obtained by providing a contact element 40 configured to come into contact with the oscillating member 31.

The contact element 40 is included in the sound variation device 4 and can reach the bell or, in general, the oscillating member 31, through an opening 10 formed in the receiving member 1.

However, the fixing means 5 have reversibility characteristics and are configured so as to provide such contact when the sound variation device 4 is connected to said receiving member 1 in the region of a specific operating position, hereinafter indicated first operating position and illustrated in figure 1 and 1A.

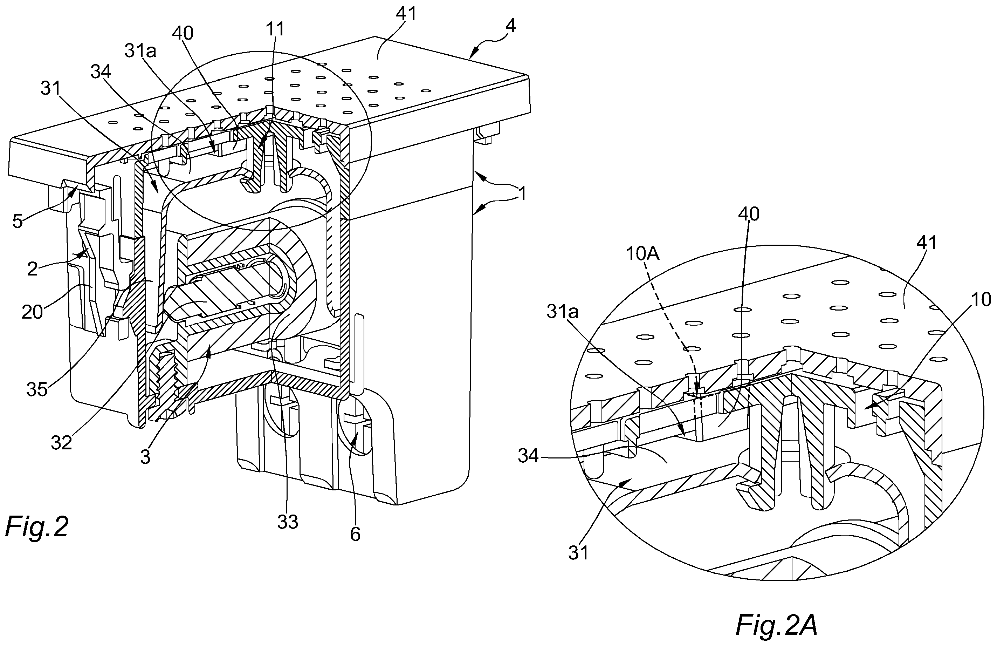

By removing the sound variation device 4, or by placing it in a different position, such as for example that of figure 2 and 2A, the contact between the contact element 40 and the bell can cease.

In general, in fact, the contact element 40 is configured to be spaced apart from the oscillating member 31 when the sound variation device 4 is removed from or is connected to the receiving member 1 in the region of a second operating position, different from the previous one.

In this way, the contact between the contact element 40 and the oscillating member can modify the frequency and/or the amplitude of oscillation of the oscillating member 31 itself with respect to the frequency/amplitude nature thereof when the constraint formed by the contact element 40 is not present.

Therefore the sound variation device 4 will advantageously have a different frequency and/or extent of oscillation when the sound variation device 4 is connected in the first operating position with respect to the frequency and/or the extent of oscillation it has when said device is removed or brought into the second operating position.

In some embodiments the sound variation device 4 comprises the covering surface 41 which, as can be observed from the figures, is intended to cover the receiving member 1 during the use of the sound device.

This covering surface 41 advantageously comprises a plurality of through-openings 42 that allow the emission of the sound which is produced by the electromechanical acoustic device 3.

The contact element 40 can for example extend away from the covering surface 41, preferably in a direction substantially perpendicular to the plane of said covering surface 41.

In some embodiments, the passage between the first operating position and the second operating position can be achieved by rotating the sound variation device 4 through 180° about an axis perpendicular to the covering surface 41.

In other words, the sound variation device 4 is connected in the second operating position in a state rotated through 180° with respect to when it is connected in the first operating position.

The reversible fixing means 5 are therefore advantageously configured so as to allow the connection of the sound variation device 4 in these two different operating positions or, in general, in two different positions that respectively allow the contact between contact element 40 and oscillating member 31, or the spacing apart of the same.

To allow the positioning of the contact element 40 without it interfering with the bell, i.e. placing it in the second operating position, the oscillating element 31 may comprise a seat 31A substantially aligned with an additional opening 10A formed in the receiving member 1.

As can be observed from figure 2A, when the sound variation device 4 is in the second operating position, the contact element 40 passes through the further opening 10A and is received in the seat 31A without coming into contact with the oscillating element 31, thus leaving it free to vibrate.

In order to contain the encumbrances and make the sound device 100 easier from the structural point of view, the bell that forms the oscillating member 31 can be supported in the region of a portion 11 of the receiving member 1 that, during use, faces the covering surface 41 formed by the sound variation device 4. Advantageously, the bell is supported to the portion 11 in the region of its upper surface 34.

The openings 10 and possibly 10A can therefore be formed in the region of this portion 11.

The contact element 40 can therefore be configured so as to come into contact with the upper surface 34 of the bell or in general of the oscillating member 31, when the sound variation device 4 is connected in said first operating position.

The invention thus solves the proposed problem, while achieving a plurality of advantages. In particular, the fact that the sound variation device is formed by the covering surface allows the contact element to be provided in a component that, by its nature, is usually interchangeable, precisely to allow the aesthetic customisation required in the electrical installations, for example in terms of colour or surface finish.

## Claims

1. A sound device (100) for electrical installations comprising a receiving member (1), connection means (2) which are configured for connecting said sound device (100) to a support frame which is intended for installing electric modules, an electromechanical acoustic device (3) which is received internally with respect to said receiving member (1) and comprising an oscillating member (31) which is configured so as to emit a sound signal following striking by means of a respective striking member (32), said sound device (100) further comprising a sound variation device (4) which is externally connectable to said receiving member (1) by means of reversible fixing means (5), wherein said sound variation device (4) includes a contact element (40) which is configured to come into contact with said oscillating member (31) through an opening (10) which is formed in said receiving member (1) when said sound variation device (4) is connected to said receiving member (1) in a first operating position, wherein the sound variation device (4) is configured to be removed from the receiving member (1) or connected to said receiving member (1) in a second operating position, the contact element (40) being spaced apart from said oscillating member (31) when said sound variation device (4) is removed from said receiving member or connected to said receiving member in said second operating position.

2. A sound device (100) according to the preceding claim, wherein said sound variation device (4) comprises a covering surface (41) which is intended to cover said receiving member (1) during the use of the sound device.

3. A sound device (100) according to the preceding claim, wherein said covering surface (41) comprises a plurality of through-openings (42) for emitting the sound which is produced by said electromechanical acoustic device (3).

4. A sound device (100) according to the preceding claim, wherein said contact element (40) extends away from said covering surface (41), preferably in a direction substantially perpendicular to the plane of said covering surface (41).

5. A sound device (100) according to any one of the preceding claims, when depending on claim 2, wherein said reversible fixing means (5) are configured so as to allow the connection of said sound variation device (4) in said first operating position and in said second operating position, said reversible fixing means (5) being preferably configured in such a manner that, when said sound variation device (4) is connected in said second operating position, it is oriented in a state rotated through 180° about an axis which is perpendicular to the covering surface with respect to when it is connected in said first operating position.

6. A sound device (100) according to any one of the preceding claims, wherein said oscillating element comprises a seat (31A) which is substantially aligned with an additional opening (10A) which is formed in said receiving member (1)

7. A sound device (100) according to claim 6, wherein said reversible fixing means (5) being configured in such a manner that, when said sound variation device (4) is connected in said second operating position, said contact element (40) is received in said seat (31A) without coming into contact with said oscillating element (31).

8. A sound device (100) according to any one of the preceding claims, wherein said oscillating element (31) is of bell-like form and comprises an upper surface (34), in the region of which it is connected in an oscillating manner to said receiving member and a lateral surface (35) on which said striking member acts, said contact element (40) being preferably configured so as to come into contact with said upper surface when said sound variation device (4) is connected in said first operating position.

9. A sound device (100) according to any one of the preceding claims, wherein said electromechanical acoustic device (3) comprises an electromagnet (33) which is configured to control said striking member (32) so as to repeatedly strike said oscillating element (31), said sound device (100) preferably comprising a terminal block (6) in order to produce an electrical connection which can excite said electromagnet (33).

10. A sound device (100) according to any one of the preceding claims, wherein said connection means (2) comprise flexible tabs (20).

11. A sound device (100) according to any one of the preceding claims, wherein said contact element (40) is configured so as to modify the frequency and/or the amplitude of oscillation of said oscillating member (31) when said sound variation device (4) is connected in said first operating position.

12. A sound device (100) according to any one of the preceding claims, including at least five substantially flat surfaces forming respective faces of a parallelepiped, said terminal block (6) being preferably placed in the region of the further face of said parallelepiped.

13. A sound device (100) according to the preceding claim when dependent on claim 2, wherein one of said five surfaces is the covering surface (41), the remaining surfaces being defined by said receiving member (1).

14. A sound device (100) according to claim 12 or 13, wherein said connection means (2) are placed in the region of two substantially flat surfaces perpendicular to said covering surface (41) and corresponding to opposite faces of said parallelepiped.

15. A sound device (100) according to any one of the preceding claims, wherein said receiving member (1) is configured such that said sound device (100) is an electrical module for electrical installations.

## Patentansprüche

1. Schallvorrichtung (100) für elektrische Installationen mit einem Aufnahmeelement (1), mit Verbindungsmittel (2), die zum Verbinden der Schallvorrichtung (100) mit einem Trägerrahmen eingerichtet sind, der zum Installieren elektrischer Module bestimmt ist und mit einer elektromechanischen akustischen Vorrichtung (3), die intern in Bezug auf das Aufnahmeelement (1) aufgenommen wird und ein Schwingelement (31) aufweist, das eingerichtet ist, um ein Schallsignal nach dem Schlagen mittels eines entsprechenden Schlagelements (32) auszusenden, wobei die Schallvorrichtung (100) ferner eine Schallvariationsvorrichtung (4) aufweist, die extern mit dem Aufnahmeelement (1) mittels reversibler Befestigungsmittel (5) verbindbar ist, wobei die Schallvariationsvorrichtung (4) ein Kontaktelement (40) aufweist, das eingerichtet ist, um mit dem Schwingelement (31) durch eine Öffnung (10) in Kontakt zu kommen, die im Aufnahmeelement (1) ausgebildet ist, wenn die Schallvariationsvorrichtung (4) mit dem Aufnahmeelement (1) in einer ersten Betriebsposition verbunden ist, wobei die Schallvariationsvorrichtung (4) eingerichtet ist, um vom Aufnahmeelement (1) entfernt oder mit dem Aufnahmeelement (1) in einer zweiten Betriebsposition verbunden zu werden, wobei das Kontaktelement (40) vom Schwingelement (31) beabstandet ist, wenn die Schallvariationsvorrichtung (4) aus dem Aufnahmeelement entfernt oder mit dem Aufnahmeelement in der zweiten Betriebsposition verbunden wird.

2. Schallvorrichtung (100) nach dem vorhergehenden Anspruch, wobei die Schallvariationsvorrichtung (4) eine Abdeckfläche (41) aufweist, die bestimmt ist, das Aufnahmeelement (1) während der Verwendung der Schallvorrichtung abzudecken.

3. Schallvorrichtung (100) nach dem vorhergehenden Anspruch, wobei die Abdeckfläche (41) eine Mehrzahl von Durchgangsöffnungen (42) zum Aussenden des von der elektromechanischen akustischen Vorrichtung (3) erzeugten Schalls aufweist.

4. Schallvorrichtung (100) nach dem vorhergehenden Anspruch, wobei sich das Kontaktelement (40) von der Abdeckfläche (41) weg erstreckt, vorzugsweise in eine Richtung, die im Wesentlichen senkrecht zur Ebene der Abdeckfläche (41) verläuft.

5. Schallvorrichtung (100) nach einem der vorhergehenden Ansprüche, wenn abhängig von Anspruch 2, wobei die reversiblen Befestigungsmittel (5) eingerichtet sind, um die Verbindung der Schallvariationsvorrichtung (4) in der ersten Betriebsposition und in der zweiten Betriebsposition zu ermöglichen, wobei die reversiblen Befestigungsmittel (5) vorzugsweise eingerichtet sind, so dass, wenn die Schallvariationsvorrichtung (4) in der zweiten Betriebsposition verbunden ist, sie in einem um 180° gedrehten Zustand um eine Achse ausgerichtet sind, die senkrecht zur Abdeckfläche steht, im Vergleich zu dem Zustand, wenn sie in der ersten Betriebsposition verbunden ist.

6. Schallvorrichtung (100) nach einem der vorhergehenden Ansprüche, wobei das Schwingelement eine Aufnahme (31A) aufweist, die im Wesentlichen mit einer zusätzlichen Öffnung (10A) ausgerichtet ist, die im Aufnahmeelement (1) ausgebildet ist

7. Schallvorrichtung (100) nach Anspruch 6, wobei die reversiblen Befestigungsmittel (5) eingerichtet sind, so dass, wenn die Schallvariationsvorrichtung (4) in der zweiten Betriebsposition verbunden ist, das Kontaktelement (40) in der Aufnahme (31A) aufgenommen wird, ohne mit dem Schwingelement (31) in Kontakt zu kommen.

8. Schallvorrichtung (100) nach einem der vorhergehenden Ansprüche, wobei das Schwingelement (31) glockenförmig ist und eine obere Fläche (34) aufweist, in deren Bereich es schwingend mit dem Aufnahmeelement verbunden ist, und eine Seitenfläche (35) aufweist, auf die das Schlagelement wirkt, wobei das Kontaktelement (40) vorzugsweise eingerichtet ist, um mit der oberen Fläche in Kontakt zu kommen, wenn die Schallvariationsvorrichtung (4) in der ersten Betriebsposition verbunden ist.

9. Schallvorrichtung (100) nach einem der vorhergehenden Ansprüche, wobei die elektromechanische akustische Vorrichtung (3) einen Elektromagneten (33) aufweist, der eingerichtet ist, um das Schlagelement (32) zu steuern, so dass es wiederholt auf das Schwingelement (31) schlägt, wobei die Schallvorrichtung (100) vorzugsweise einen Anschlussblock (6) aufweist, um eine elektrische Verbindung herzustellen, die den Elektromagneten (33) anregen kann.

10. Schallvorrichtung (100) nach einem der vorhergehenden Ansprüche, wobei die Verbindungsmittel (2) flexible Laschen (20) aufweisen.

11. Schallvorrichtung (100) nach einem der vorhergehenden Ansprüche, wobei das Kontaktelement (40) eingerichtet ist, um die Frequenz und/oder die Schwingungsamplitude des Schwingelements (31) zu ändern, wenn die Schallvariationsvorrichtung (4) in der ersten Betriebsposition verbunden ist.

12. Schallvorrichtung (100) nach einem der vorhergehenden Ansprüche, die zumindest fünf im Wesentlichen ebene Flächen umfasst, die jeweilige Flächen eines Parallelepipeds bilden, wobei der Anschlussblock (6) vorzugsweise im Bereich der weiteren Fläche des Parallelepipeds angeordnet ist.

13. Schallvorrichtung (100) nach dem vorhergehenden Anspruch, wenn abhängig von Anspruch 2, wobei eine der fünf Flächen die Abdeckfläche (41) ist, wobei die restlichen Flächen durch das Aufnahmeelement (1) gebildet werden.

14. Schallvorrichtung (100) nach Anspruch 12 oder 13, wobei die Verbindungsmittel (2) im Bereich zweier im Wesentlichen ebener Flächen senkrecht zur Abdeckfläche (41) angeordnet sind und den gegenüberliegenden Flächen des Parallelepipeds entsprechen.

15. Schallvorrichtung (100) nach einem der vorhergehenden Ansprüche, wobei das Aufnahmeelement (1) eingerichtet ist, so dass die Schallvorrichtung (100) ein elektrisches Modul für elektrische Installationen ist.

## Revendications

1. Dispositif sonore (100) pour installations électriques comprenant un élément récepteur (1), des moyens de connexion (2) configurés pour connecter ledit dispositif sonore (100) à un cadre de support destiné à l'installation de modules électriques, un dispositif acoustique électromécanique (3) qui est reçu intérieurement par rapport audit élément récepteur (1) et qui comprend un élément oscillant (31) qui est configuré pour émettre un signal sonore après avoir été frappé au moyen d'un élément de frappe (32) respectif, ledit dispositif sonore (100) comprenant en outre un dispositif de variation sonore (4) qui est connectable extérieurement audit élément récepteur (1) au moyen de moyens de fixation réversibles (5), dans lequel ledit dispositif de variation sonore (4) comprend un élément de contact (40) qui est configuré pour entrer en contact avec ledit élément oscillant (31) à travers une ouverture (10) qui est formée dans ledit élément récepteur (1) lorsque ledit dispositif de variation sonore (4) est connecté audit élément récepteur (1) dans une première position de fonctionnement, dans lequel le dispositif de variation sonore (4) est configuré pour être retiré de l'élément récepteur (1) ou connecté audit élément récepteur (1) dans une seconde position de fonctionnement, l'élément de contact (40) étant espacé dudit élément oscillant (31) lorsque ledit dispositif de variation sonore (4) est retiré dudit élément récepteur ou connecté audit élément récepteur dans ladite seconde position de fonctionnement.

2. Dispositif sonore (100) selon la revendication précédente, dans lequel ledit dispositif de variation sonore (4) comprend une surface de recouvrement (41) destinée à recouvrir ledit élément récepteur (1) pendant l'utilisation du dispositif sonore.

3. Dispositif sonore (100) selon la revendication précédente, dans lequel ladite surface de recouvrement (41) comprend une pluralité d'ouvertures traversantes (42) pour émettre le son qui est produit par ledit dispositif acoustique électromécanique (3).

4. Dispositif sonore (100) selon la revendication précédente, dans lequel ledit élément de contact (40) s'étend à l'écart de ladite surface de recouvrement (41), de préférence dans une direction sensiblement perpendiculaire au plan de ladite surface de recouvrement (41).

5. Dispositif sonore (100) selon l'une quelconque des revendications précédentes, lorsqu'elle dépend de la revendication 2, dans lequel lesdits moyens de fixation réversibles (5) sont configurés de manière à permettre la connexion dudit dispositif de variation sonore (4) dans ladite première position de fonctionnement et dans ladite seconde position de fonctionnement, lesdits moyens de fixation réversibles (5) étant de préférence configurés de manière à ce que, lorsque ledit dispositif de variation sonore (4) est connecté dans ladite seconde position de fonctionnement, il soit orienté dans un état tourné de 180° autour d'un axe qui est perpendiculaire à la surface de recouvrement par rapport au moment où il est connecté dans ladite première position de fonctionnement.

6. Dispositif sonore (100) selon l'une quelconque des revendications précédentes, dans lequel ledit élément oscillant comprend un siège (31A) qui est sensiblement aligné avec une ouverture supplémentaire (10A) qui est formée dans ledit élément récepteur (1).

7. Dispositif sonore (100) selon la revendication 6, dans lequel lesdits moyens de fixation réversibles (5) sont configurés de telle sorte que, lorsque ledit dispositif de variation sonore (4) est connecté dans ladite seconde position de fonctionnement, ledit élément de contact (40) est reçu dans ledit siège (31A) sans entrer en contact avec ledit élément oscillant (31).

8. Dispositif sonore (100) selon l'une quelconque des revendications précédentes, dans lequel ledit élément oscillant (31) est en forme de cloche et comprend une surface supérieure (34), au niveau de laquelle il est relié de manière oscillante audit élément récepteur, et une surface latérale (35) sur laquelle agit ledit élément de frappe, ledit élément de contact (40) étant de préférence configuré de manière à entrer en contact avec ladite surface supérieure lorsque ledit dispositif de variation sonore (4) est connecté dans ladite première position de fonctionnement.

9. Dispositif sonore (100) selon l'une quelconque des revendications précédentes, dans lequel ledit dispositif acoustique électromécanique (3) comprend un électro-aimant (33) qui est configuré pour commander ledit élément de frappe (32) de manière à frapper de façon répétée ledit élément oscillant (31), ledit dispositif sonore (100) comprenant de préférence un bornier (6) afin de produire une connexion électrique pouvant exciter ledit électro-aimant (33).

10. Dispositif sonore (100) selon l'une quelconque des revendications précédentes, dans lequel lesdits moyens de connexion (2) comprennent des languettes flexibles (20).

11. Dispositif sonore (100) selon l'une quelconque des revendications précédentes, dans lequel ledit élément de contact (40) est configuré de manière à modifier la fréquence et/ou l'amplitude d'oscillation dudit élément oscillant (31) lorsque ledit dispositif de variation sonore (4) est connecté dans ladite première position de fonctionnement.

12. Dispositif sonore (100) selon l'une quelconque des revendications précédentes, comportant au moins cinq surfaces sensiblement planes formant les faces respectives d'un parallélépipède, ledit bornier (6) étant de préférence placé dans la zone de la face supplémentaire dudit parallélépipède.

13. Dispositif sonore (100) selon la revendication précédente lorsqu'elle dépend de la revendication 2, dans lequel l'une desdites cinq surfaces est la surface de recouvrement (41), les autres surfaces étant définies par ledit élément récepteur (1).

14. Dispositif sonore (100) selon la revendication 12 ou 13, dans lequel lesdits moyens de connexion (2) sont placés dans la région de deux surfaces sensiblement planes perpendiculaires à ladite surface de recouvrement (41) et correspondant aux faces opposées dudit parallélépipède.

15. Dispositif sonore (100) selon l'une quelconque des revendications précédentes, dans lequel ledit élément récepteur (1) est configuré de telle sorte que ledit dispositif sonore (100) est un module électrique pour les installations électriques.
